# FASCICULE DE BREVET EUROPEEN

(11) **EP 3 218 266 B1**
(45) Date de publication et mention de la délivrance du brevet: **06.12.2017**
(21) Numéro de dépôt: 15821119.3
(22) Date de dépôt: 15.12.2015
(51) Int. Cl.: B64G 1/50

(54) **ENGIN SPATIAL**
RAUMFAHRZEUG
SPACECRAFT

(30) Priorité: 17.12.2014 FR 1462565
(43) Date de publication de la demande: 20.09.2017
(73) Titulaire: Airbus Defence and Space SAS, 78130 Les Mureaux (FR)
(72) Inventeur: MENA, Fabrice, 81500 Teulat (FR); COUTAL, Patrick, 31290 Renneville (FR)
(74) Mandataire: Cabinet Plasseraud
(86) Numéro de dépôt international: PCT/FR2015/053502
(87) Numéro de publication internationale: WO 2016/097575

(56) Documents cités:
- JP-U- H03 109 999
- KR-B1- 101 240 434
- US-A1- 2008 257 525
- US-A1- 2014 299 714

## Description

La présente invention concerne un engin spatial et en particulier un satellite géostationnaire.

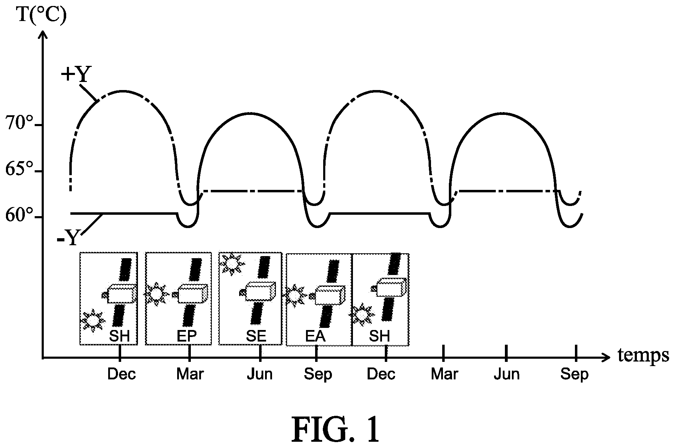

En raison du mouvement de révolution de la terre autour du soleil, les différentes faces d'un satellite géostationnaire ne reçoivent pas la même quantité de rayonnement solaire au cours des saisons. Il en résulte des variations cycliques de températures sur la face +Y et sur la face -Y. Ainsi, durant les équinoxes d'hiver et d'été (EQ), les faces -Y et +Y présentent des températures moins élevées que durant les solstices d'hiver (WS) et d'été (SS) comme illustré sur la figure 1. Par ailleurs, la température des faces du satellite fluctue également au cours du temps. Cette température est environ égale à 20°C en début de vie du satellite et de 70°C en fin de vie du satellite. Ces variations de température au cours des saisons et au cours du temps sont reproduites au sol dans une atmosphère sous vide, au cours de tests de validation du satellite.

Ces tests de validation sont longs et contraignants à réaliser.

Pour faciliter les tests de validation au sol, il a été envisagé de diminuer les variations de température au cours des saisons et au cours du temps.

A cette fin, les faces +Y et -Y du satellite ont été réchauffées au moment de l'équinoxe par des chaufferettes électriques. Néanmoins, les chaufferettes présentent une efficacité limitée et requiert de sur-dimensionner le système de puissance électrique du satellite. Ce surdimensionnement augmente notablement le coût du satellite.

Par ailleurs, pour réguler les températures des faces de satellites d'observation de la terre, des persiennes (en anglais « louvers ») ont été fixées en vis-à-vis de radiateurs montés sur les faces extérieures des satellites. Ces persiennes occultent plus ou moins la face extérieure du radiateur en fonction des besoins en refroidissement des satellites. Les persiennes sont montées pivotantes autour d'un axe disposé le long d'une tranche longitudinale des persiennes. En position fermée, de telles persiennes occultent l'ensemble de la face extérieure du radiateur. Ces persiennes ont pour unique fonction d'empêcher le rayonnement solaire d'atteindre le radiateur. De plus, ces persiennes nécessitent un mécanisme complexe permettant la rotation des persiennes. Ce mécanisme doit avoir une bonne tenue dans un environnement thermique variable.

Le document JP H03 109999 divulgue un satellite comprenant un dispositif permettant d'absorber une partie du rayonnement solaire incident (le) principalement durant les équinoxes de printemps et d'automne et de le transférer par rayonnement au radiateur adjacent. Ce dispositif comprend deux plaques thermo-rayonnantes chacune montée sur un bras de support d'un panneau solaire. Au cours d'une journée, les deux bras de support et les deux plaques thermo-rayonnantes sont entrainés en rotation autour de l'axe longitudinal des bras de support.
Chaque plaque est pleine. Elle présente une face à forte absorptivité et à forte émissivité et une face opposée à faible absorptivité. Cette dernière face est propre à réfléchir le rayonnement solaire. Les plaques sont entraînées en rotation autour d'un axe perpendiculaire à l'axe longitudinal du bras de support qui la supporte. L'amplitude de la rotation est d'environ 180°. L'entraînement en rotation est réalisé à certaines saisons. Ainsi, à l'équinoxe de printemps et d'automne, les faces à forte absorptivité des deux plaques thermo-rayonnantes sont pivotées de manière à présenter un angle de 23° avec les radiateurs.
Ainsi, les faces à forte absorptivité absorbent le rayonnement solaire et émettent de la chaleur vers les radiateurs. Lors du solstice d'été, la plaque thermo-rayonnante du bras de support situé du côté Nord est entrainée en rotation afin que sa face de faible absorptivité soit dirigée vers le rayonnement solaire et soit perpendiculaire au radiateur Nord. Cette face est ainsi exposée vers le soleil pour ne pas chauffer le radiateur Sud du satellite lorsqu'il est exposé au rayonnement solaire direct.

Enfin, lors du solstice d'hiver, la plaque thermo-rayonnante du bras de support situé du côté Sud est entrainée en rotation afin que sa face de faible absorptivité soit dirigée vers le rayonnement solaire et soit perpendiculaire au radiateur Sud.

Toutefois, ce dispositif requiert un ou deux moteurs électriques supplémentaires. Ce ou ces moteurs alourdissent le satellite et augmentent le coût de fabrication de celui-ci.

De plus, le satellite du document JP H03 109999 n'est pas sécurisé. Si une pièce d'entraînement ou l'un des moteurs d'entraînement en rotation des plaques thermo- rayonnantes tombe en panne au cours d'une mission, il est difficile de les réparer. Si de plus cette panne a lieu au cours des solstices, les plaques thermo-rayonnantes restent dans une position qui va accroître les différences de températures au cours des autres saisons et qui mettra en danger le fonctionnement des équipements électroniques embarqués.

Le but de la présente invention est de proposer un système à moindre coût et plus fiable qui permettrait de limiter les variations de température entre les faces Nord et Sud d'un satellite au cours des équinoxes et au cours des solstices.

A cet effet, l'invention a pour objet un engin spatial comprenant :
- une caisse ayant une face +Y et une face -Y opposée à la face +Y;
- un premier radiateur porté par au moins une face parmi la face +Y et la face -Y ; ledit premier radiateur ayant une face externe ;
- un premier bras de support s'étendant sensiblement perpendiculairement à la face externe du premier radiateur, ledit premier bras de support ayant un axe longitudinal (A-A) ;
- un moteur d'entraînement propre à entraîner le premier bras de support en rotation autour dudit axe longitudinal (A-A) du premier bras de support, la vitesse de rotation du premier bras de support étant sensiblement égale à la vitesse de rotation du soleil autour de l'engin spatial ;
- un premier assemblage porté par le premier bras de support, ledit premier assemblage ayant au moins une face d'absorption propre à absorber une partie du rayonnement solaire incident durant les équinoxes de printemps et d'automne, ledit premier assemblage étant apte à transmettre une chaleur générée par ladite partie du rayonnement solaire absorbée au premier radiateur; ladite face d'absorption étant inclinée par rapport à la face externe du premier radiateur d'un angle sensiblement compris entre 20° et 26°; ledit premier assemblage 34 comprend au moins deux lamelles 36 fixées l'une au-dessus de l'autre, et séparées l'une de l'autre par un espace libre e, lesdites lamelles étant fixes par rapport au premier bras de support 32.

Avantageusement, dans la présente invention, les lamelles sont fixes par rapport au bras de support. Il en découle un système plus simple, moins coûteux et plus fiable.

Avantageusement, l'assemblage selon l'invention présente une surface ajourée, qui absorbe de façon variable et sélective (1% à 100%) le rayonnement solaire incident. En effet, le rayonnement solaire « traverse » l'assemblage au cours des solstices. Cela lui donne la qualité d'être discret à la saison souhaitée, et permet son caractère « fixe ».

Bien que les lamelles occultent une partie des rayonnements au cours des solstices, leur épaisseur est si faible que la perte de chaleur qui en découle est très négligeable puisqu'elle représente quelques pour cent de la chaleur perçue, typiquement autour de 5%.

Avantageusement, dans l'assemblage selon l'invention, seule la face d'absorption est exposée au rayonnement solaire incident et cette face est toujours au droit du radiateur adjacent.

Avantageusement, l'assemblage selon l'invention est moins coûteux à la fabrication. De plus il est passif et ne nécessite pas d'alimentation électrique.

Avantageusement, l'assemblage selon l'invention est peu encombrant et présente une masse très faible de l'ordre de quelques kilos, typiquement autour d'un kilo.

Suivant des modes particuliers de réalisation, l'engin spatial comporte une ou plusieurs des caractéristiques suivantes :
- Le premier radiateur est porté par la face -Y et dans lequel lesdites lamelles du premier assemblage sont sensiblement parallèles à la direction du rayonnement solaire au cours du solstice d'été.

Avantageusement, comme ladite au moins lamelle est inclinée d'un angle correspondant à l'angle formé entre la face externe du radiateur et la direction prise par le rayonnement solaire au cours du solstice, ladite au moins lamelle ne n'est pas chauffée au cours du solstice.
- l'engin spatial comporte un deuxième radiateur porté par l'autre face parmi la face -Y et la face +Y; ledit deuxième radiateur ayant une face externe ; un deuxième bras de support s'étendant sensiblement perpendiculairement à la face externe du deuxième radiateur, ledit deuxième bras de support ayant un axe longitudinal (B-B) ;
- un moteur d'entraînement propre à entraîner le deuxième bras de support en rotation autour dudit axe longitudinal (B-B) du deuxième bras de support, la vitesse de rotation du deuxième bras de support étant sensiblement égale à la vitesse de rotation du soleil autour de l'engin spatial ;
- un deuxième assemblage porté par le deuxième bras de support, ledit deuxième assemblage ayant au moins une face d'absorption inclinée par rapport à la face externe du deuxième radiateur d'un angle (α) sensiblement compris entre 20° et 26°,
   et dans lequel ledit deuxième assemblage comprend plusieurs lamelles fixes par rapport au deuxième bras de support ; lesdites lamelles étant fixées les unes au-dessus des autres et espacées les unes des autres par un espace libre, lesdites lamelles du deuxième assemblage sont sensiblement parallèles à la direction du rayonnement solaire au cours du solstice d'hiver
- L'engin comporte au moins un panneau solaire, et dans lequel ledit bras de support supporte ledit au moins un panneau solaire.

Comme les panneaux solaires sont généralement entrainés en rotation autour d'un axe perpendiculaire à la face externe du radiateur à une vitesse égale à la vitesse de rotation du soleil autour de l'engin spatial, l'utilisation de ce bras de support pour porter l'assemblage de lamelles permet de ne pas rajouter un mécanisme de rotation supplémentaire. Cette mise en oeuvre est très avantageuse d'un point de vue économique.
- Les lamelles comprennent un film polyimide et des baguettes propres à rigidifier ledit film polyimide.
- Ladite au moins face d'absorption présente un revêtement ayant une forte absorptivité solaire, par exemple un revêtement de couleur noire.
- La face externe dudit radiateur présente un revêtement non spéculaire.
- Chaque lamelle présente une épaisseur inférieure au millimètre.
- Les lamelles d'un assemblage parmi le premier assemblage et le deuxième assemblage sont parallèles les unes aux autres.

L'invention sera mieux comprise à la lecture de la description qui va suivre, donnée uniquement à titre d'exemple et faîte en se référant aux dessins, sur lesquels :
- la figure 1 sont deux courbes représentatives des variations de température des faces + Y et -Y d'un engin spatial selon l'état de la technique au cours d'une année ;
- la figure 2 est une vue en perspective de l'engin spatial selon un premier mode de réalisation l'invention, en orbite géostationnaire ;
- la figure 3 est une vue en coupe d'un assemblage de lamelles calorifères ;
- la figure 4 est une vue en perspective schématique illustrant le mode de fonctionnement du premier mode de réalisation de l'invention, au cours du solstice d'été;
- la figure 5 est une vue en perspective schématique illustrant le mode de fonctionnement du premier mode de réalisation de l'invention, au cours de l'équinoxe ; et
- la figure 6 est une vue schématique simplifiée d'un mode de réalisation du satellite selon l'invention à l'équinoxe de printemps EP, au solstice d'été SE, à l'équinoxe d'automne EA et au solstice d'hiver SH.

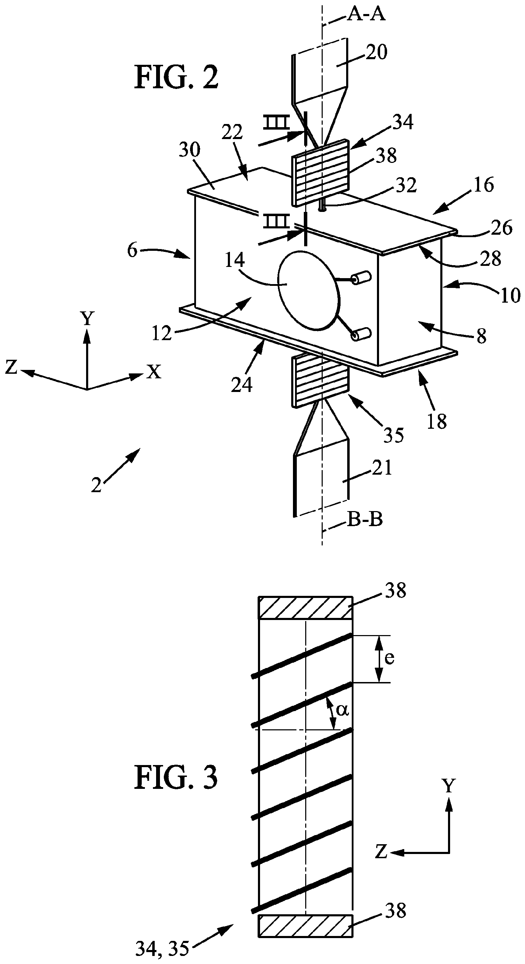

La présente invention est définie par rapport à un repère orthogonal R (X, Y, Z) représenté sur les figures 2 à 5. Le sens des vecteurs X, Y et Z est défini comme étant le sens positif. Le sens inverse est défini comme étant un sens négatif.

Sur les différentes figures, les mêmes références désignent des éléments identiques ou similaires.

En référence à la figure 2, un engin spatial 2 selon le premier mode de réalisation de l'invention se présente sous la forme d'une caisse 4 parallélépipédique. Cette caisse 4 présente toujours la même face dirigée vers la Terre, cette face étant appelée la face Terre 6. La face opposée et parallèle à la face Terre 6 est quant à elle appelée la face anti- Terre 8.

La face - X, aussi appelée face Est 10, et la face +X, aussi appelée face Ouest 12, sont des faces opposées, parallèles entre elles et perpendiculaires à la direction de déplacement de l'engin spatial 2. Des antennes de communication 14 sont généralement fixées sur les faces -X 10 et +X 12. La face - Y, aussi appelée face Nord 16, et la face + Y, aussi appelée face Sud 18, sont deux autres faces de la caisse. Elles sont opposées, parallèles entre elles et perpendiculaires à l'axe Nord-Sud de la Terre.

L'engin spatial 2 comprend un premier radiateur 22 et un second radiateur principal 24 pour refroidir des équipements électroniques contenus dans la caisse. Ces équipements électroniques non représentés sur les figures sont reliés thermiquement au premier et au second radiateurs, par exemple, par l'intermédiaire de caloducs également non représentés.

Le premier radiateur 22, de forme générale parallélépipédique, présente quatre faces latérales 26, une face principale interne 28 fixée sur la face -Y 16, une face principale externe 30 opposée à la face principale interne et située du côté de l'espace extérieur à l'engin spatial. Les faces principales interne 28 et externe 30 s'étendent dans la plan (X, Y). Le second radiateur 24 est identique au premier radiateur 22. Il ne sera pas décrit en détail. Il est fixé sur la face +Y 18.

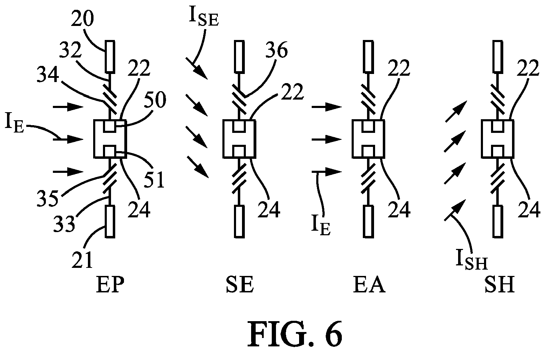

En référence aux figures 1 et 6, l'engin spatial 2 comprend un premier 32 et un deuxième 33 bras de support s'étendant sensiblement selon la direction Y, un premier 20 et un deuxième 21 panneaux solaires fixés à une extrémité distale du premier 32 et du deuxième 33 bras de support, et un ou deux motoréducteurs 50, 51 propres à entrainer en rotation le premier 32 et respectivement le deuxième 33 bras de support à une vitesse sensiblement égale à la vitesse de rotation du soleil autour de l'engin spatial. Ainsi, les panneaux solaires 20,21 sont dirigés vers le soleil tout le long de la journée.

Le premier bras de support 32 présente un axe longitudinal (A-A). Le motoréducteur 50 est propre à entraîner en rotation le premier bras de support 32 autour de l'axe longitudinal (A-A). Le deuxième bras de support 33 présente un axe longitudinal (B-B). Le motoréducteur 51 est propre à entraîner en rotation le deuxième bras de support 33 autour de l'axe longitudinal (B-B).

En variante, un seul motoréducteur est propre à entrainer le premier bras de support 32 et le deuxième bras de support 33.

L'engin spatial 2 comprend en outre un premier assemblage 34 de lamelles 36 et une deuxième assemblages 35 de lamelles 36 fixés au premier bras de support 32 et respectivement au deuxième bras de support 33 entre la caisse 4 et le premier panneau solaire 20 et le deuxième panneau solaire 21. Chaque assemblage 34,35 de lamelles est immobile par rapport au bras de support 32,33 qui le porte. Chaque assemblage 34,35 de lamelles est entraîné en rotation par le bras de support 32,33 qui le porte.

Les lamelles 36 des assemblages de lamelles sont calorifères. Elles sont propres à absorber le rayonnement solaire à l'équinoxe et à transférer, par radiation, la chaleur générée par ce rayonnement solaire au premier radiateur 22 et au second radiateur 24, comme explicité ci -après.

Les lamelles calorifères 36 sont des plaques d'épaisseur très faible de l'ordre du millimètre ou moins. Elles sont, par exemple, réalisées à partir d'un feuillet et de baguettes de rigidification fixées sur une face du feuillet. Le feuillet est réalisé, par exemple, par un film en polyimide désigné par la marque déposée « Kapton » ou par des couches en graphite. Les baguettes sont, par exemple, réalisées en carbone.

Comme visible sur la figure 3, les lamelles calorifères 36 sont fixées les unes au-dessus des autres. Elles sont superposées selon la direction Y. Un espace libre e est agencé entre deux lamelles calorifères 36 superposées l'une sur l'autre. Les lamelles calorifères 36 de l'assemblage sont, avantageusement, fixées dans un cadre 38.

Les lamelles calorifères 36 ont une face principale plane 40, dite face d'absorption 40, disposée en regard de la face externe 30 du premier radiateur ou du second radiateur 24 et une face extérieure 42 opposée à la face d'absorption 40. La face d'absorption 40 du premier assemblage 34 de lamelles monté sur la face -Y 16 est inclinée par rapport à la face principale externe 30 du premier radiateur d'un angle dièdre α environ égal à 23, 5°. De la même façon, la face d'absorption 40 du deuxième assemblage 35 de lamelles monté sur la face +Y 18 est inclinée par rapport à la face principale externe 30 du second radiateur d'un angle dièdre α environ égal à 23, 5°. L'ouverture dudit angle dièdre α s'étend du côté de la direction du rayonnement solaire incident Is.

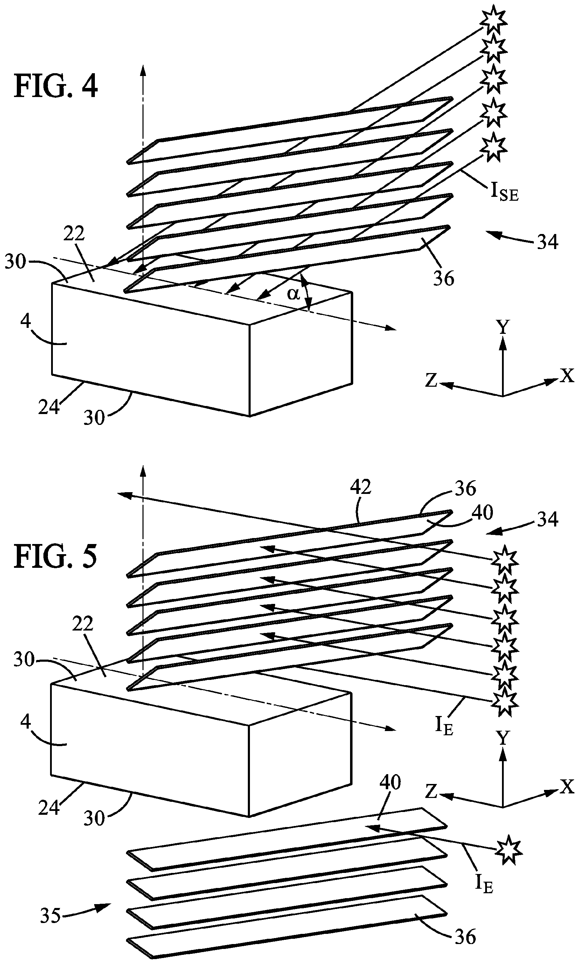

Comme visible sur les figures 4 et 6, la valeur de cet angle dièdre α correspond à l'angle maximal formé entre la face principale externe 30 du premier radiateur 22 et la direction du rayonnement solaire incident Is_{E} durant le solstice d'été SE. De la même façon, cette valeur correspond à l'angle maximal formé entre la face principale externe 30 du second radiateur 24 et la direction du rayonnement solaire incident Is_{H} durant le solstice d'hiver SH.

En fonctionnement, au cours du solstice d'été SE, la direction du rayonnement solaire Is_{E} est sensiblement parallèle aux lamelles calorifères 36 du premier assemblage 34, comme visible sur les figures 4 et 6. Comme les lamelles calorifères présentent une épaisseur faible, leurs présences n'entrainent pas de perte de capacité de rejection thermique pour le premier radiateur 22. La quasi-totalité du rayonnement solaire incident Is_{E} atteint le premier radiateur 22. Le premier bras de support 32 pivote autour de son axe longitudinal (A-A) (autour de la direction Y) à une vitesse égale à la vitesse de rotation du soleil autour de l'engin spatial. Ainsi, la direction du rayonnement solaire Is_{E} est parallèle aux lamelles calorifères tout au long de la journée.

Au cours du solstice d'hiver SH, la direction du rayonnement solaire Is_{H} est parallèle aux lamelles calorifères du deuxième assemblage 35 de lamelles fixé au deuxième bras de support 33 situé du côté de la face +Y 18. La présence des lamelles calorifères n'entrainent pas de perte calorifique pour le second radiateur 24.

En référence au figures 5 et 6, au cours de l'équinoxe de printemps EP et au cours de l'équinoxe d'automne EA, la direction du rayonnement solaire incident I_{E} s'étend dans le plan (X, Y). Cette direction I_{E} forme un angle d'environ 23,5° avec le plan médian des lamelles calorifères 36. En conséquence, les faces d'absorption 40 des lamelles calorifères qui sont en regard de la face externe 30 du premier radiateur et les faces d'absorption 40 des lamelles calorifères qui sont en regard de la face externe 30 du second radiateur absorbent la partie UV du rayonnement solaire incident I_{E} et se réchauffent. Les lamelles calorifères 36 peuvent ainsi atteindre une température d'environ 90°C. Lorsque les lamelles calorifères 36 sont chaudes, elles rayonnent cette chaleur vers le radiateur situé du côté du bras de support portant l'assemblage calorifère. Ainsi, au cours de l'équinoxe de printemps EP et au cours de l'équinoxe d'automne EA, le premier radiateur 22 et le second radiateur 24 se réchauffent et réchauffent les faces +Y 18 et -Y 16 de la caisse. Tout comme pour le solstice d'été, le premier bras de support 32 et le deuxième bras de support 33 pivotent autour de leur axe longitudinal à une vitesse égale à la vitesse de rotation du soleil autour de l'engin spatial afin que le rayonnement solaire incident IE réchauffe les faces d'absorption 40 des lamelles calorifères tout au long de la journée.

Une élévation de température d'environ 15°C peut, par exemple, être atteinte à l'aide d'un assemblage de vingt-cinq lamelles calorifères d'une dimension de 2 300 par 50 millimètres, deux lamelles adjacentes étant espacées d'un écartement de 19, 9 millimètres.

Ainsi, les variations de température entre les équinoxes et les solstices, sont diminuées.

Préférentiellement, les faces d'absorption 40 des lamelles calorifères 36 présentent un revêtement à forte absorptivité solaire afin d'absorber un maximum de rayonnement solaire. Elles sont, par exemple, de couleur noire. L'homme du métier thermicien du spatial choisit un matériau adapté en fonction de multiples critères en dehors de l'absorptivité, En général les matériaux et revêtement choisi auront avec une absorptivité solaire supérieure à 0.6.

Préférentiellement, le premier radiateur 22 et le second radiateur 24 sont revêtus d'un matériau non spéculaire ou peu spéculaire afin que les radiateurs ne réchauffent pas les lamelles calorifères 36 au cours des solstices par réflexion du flux solaire.

Préférentiellement, les lamelles calorifères 36 sont des plaques d'épaisseur inférieure au millimètre.

Notez que contrairement aux persiennes (en anglais « louvers »), les lamelles calorifères 36 ne sont pas mobiles autour d'un axe contenu dans leur plan médian ou parallèle à leur plan médian. Elles sont fixes par rapport au cadre et au bras de support 32 qui les porte.

En variante, les lamelles calorifères 36 présentent un plan médian incliné par rapport à la face principale externe 30 des premier et second radiateurs d'un angle dièdre compris entre 20° et 26°.

Chaque assemblage 34, 35 comporte au moins deux lamelles calorifères 36. Dans chaque assemblage, les faces principales 40 des lamelles sont disposées parallèlement les unes aux autres. Dans chaque assemblage 34, 35, l'espace libre e entre deux lamelles calorifères superposées et adjacentes est compris entre 0.5 cm et 10 cm pour des lamelles de 50 mm de largeur .

Les lamelles calorifères 36 du premier assemblage 34 sont sensiblement parallèles à la direction du rayonnement solaire Is_{E} au cours du solstice d'été SE.

Les lamelles calorifères (36) du deuxième assemblage (35) sont sensiblement parallèles à la direction du rayonnement solaire (Is_{H}) au cours du solstice d'hiver (SH)

## Revendications

1. Engin spatial (2) comprenant :
- une caisse (4) ayant une face +Y (18) et une face -Y (16) opposée à la face +Y (18);
- un premier radiateur (22) porté par au moins une face parmi la face +Y (18) et la face -Y (16) ; ledit premier radiateur (22) ayant une face externe (30) ;
- un premier bras de support (32) s'étendant sensiblement perpendiculairement à la face externe (30) du premier radiateur, ledit premier bras de support (32) ayant un axe longitudinal (A-A) ;
- un moteur d'entraînement (50, 51) propre à entraîner le premier bras de support (32) en rotation autour dudit axe longitudinal (A-A) du premier bras de support, la vitesse de rotation du premier bras de support (32) étant sensiblement égale à la vitesse de rotation du soleil autour de l'engin spatial (2) ;
- un premier assemblage (34) porté par le premier bras de support (32), ledit premier assemblage (34) ayant au moins une face d'absorption (40) propre à absorber une partie du rayonnement solaire incident (I_{E}) durant les équinoxes de printemps (EP) et d'automne (EA), ledit premier assemblage (34) étant apte à transmettre une chaleur générée par ladite partie du rayonnement solaire absorbé au premier radiateur (22); ladite face d'absorption (40) étant inclinée par rapport à la face externe (30) du premier radiateur (22) d'un angle (α) sensiblement compris entre 20° et 26°,
**caractérisé en ce que** ledit premier assemblage (34) comprend au moins deux lamelles (36) fixées l'une au-dessus de l'autre, et séparées l'une de l'autre par un espace libre (e), lesdites lamelles étant fixes par rapport au premier bras de support (32).

2. Engin spatial (2) selon la revendication 1, dans lequel ledit premier radiateur (22) est porté par la face -Y (16) et dans lequel lesdites lamelles (36) du premier assemblage (34) sont sensiblement parallèles à la direction du rayonnement solaire (Is_{E}) au cours du solstice d'été (SE).

3. Engin spatial (2) selon l'une quelconque des revendications 1 et 2, qui comporte :
- un deuxième radiateur (24) porté par l'autre face parmi la face -Y (16) et la face +Y (18); ledit deuxième radiateur (24) ayant une face externe (30) ;
- un deuxième bras de support (33) s'étendant sensiblement perpendiculairement à la face externe (30) du deuxième radiateur (24), ledit deuxième bras de support (33) ayant un axe longitudinal (B-B) ;
- un moteur d'entraînement (50, 51) propre à entraîner le deuxième bras de support (33) en rotation autour dudit axe longitudinal (B-B) du deuxième bras de support, la vitesse de rotation du deuxième bras de support (33) étant sensiblement égale à la vitesse de rotation du soleil autour de l'engin spatial (2) ;
- un deuxième assemblage (35) porté par le deuxième bras de support (33), ledit deuxième assemblage (35) ayant au moins une face d'absorption (40) inclinée par rapport à la face externe (30) du deuxième radiateur (24) d'un angle (α) sensiblement compris entre 20° et 26°,
et dans lequel ledit deuxième assemblage (35) comprend plusieurs lamelles (36) fixes par rapport au deuxième bras de support (33) ; lesdites lamelles (36) étant fixées les unes au-dessus des autres et espacées les unes des autres par un espace libre (e), lesdites lamelles (36) du deuxième assemblage (35) sont sensiblement parallèles à la direction du rayonnement solaire (Is_{H}) au cours du solstice d'hiver (SH).

4. Engin spatial (2) selon l'une quelconque des revendications 1 à 3, qui comporte au moins un panneau solaire (20, 21), et dans lequel ledit premier bras de support (32) et/ou ledit deuxième bras de support (32) supporte ledit au moins un panneau solaire (20, 21).

5. Engin spatial (2) selon l'une quelconque des revendications 1 à 4, dans lequel lesdites lamelles (36) comprennent un film polyimide et des baguettes propres à rigidifier ledit film polyimide.

6. Engin spatial (2) selon l'une quelconque des revendications 1 à 5, dans lequel ladite au moins face d'absorption (40) présente un revêtement ayant une forte absorptivité solaire, par exemple un revêtement de couleur noire.

7. Engin spatial (2) selon l'une quelconque des revendications 1 à 6, dans lequel la face externe (30) dudit radiateur présente un revêtement non spéculaire.

8. Engin spatial (2) selon l'une quelconque des revendications 1 à 7, dans lequel chaque lamelle (36) présente une épaisseur inférieure au millimètre.

9. Engin spatial (2) selon l'une quelconque des revendications 1 à 8, dans lequel lesdites lamelles (36) d'un assemblage parmi le premier assemblage (34) et le deuxième assemblage (35) sont parallèles les unes aux autres.

## Patentansprüche

1. Raumfahrzeug (2) aufweisend:
- ein Gehäuse (4) mit einer Fläche +Y (18) und einer Fläche -Y (16), die der Fläche +Y (18) gegenüberliegt;
- einen ersten Radiator (22), der von mindestens einer der Fläche +Y (18) und Fläche - Y (16) getragen wird; wobei der Radiator (22) eine Außenfläche (30) hat;
- einen ersten Trägerarm (32), der sich im Wesentlichen senkrecht zur Außenfläche (30) des ersten Radiators erstreckt, wobei der erste Trägerarm (32) eine Längsachse (A-A) hat;
- einen Antriebsmotor (50, 51), der zum Antreiben des ersten Trägerarms (32) in Drehung um die Längsachse (A-A) des ersten Trägerarms geeignet ist, wobei die Drehgeschwindigkeit des ersten Trägerarms (32) im Wesentlichen gleich der Drehgeschwindigkeit der Sonne um das Raumfahrzeug (2) ist;
- eine von dem ersten Trägerarm (32) getragene erste Anordnung (34), die mindestens eine Absorptionsfläche (40) hat, die geeignet ist, einen Teil der während des Frühlingsäquinoktiums (EP) und Herbstäquinoktiums (EA) auftreffenden Sonnenstrahlung (I_{E}) zu absorbieren, wobei die erste Anordnung (34) fähig ist, die von dem absorbierten Teil der Sonnenstrahlung erzeugte Wärme zu dem ersten Radiator (22) weiterzuleiten; wobei die Absorptionsfläche (40) in einem Winkel (α), der im Wesentlichen zwischen 20° und 26° ist, bezüglich der Außenfläche (30) des ersten Radiators (22) geneigt ist,
**dadurch gekennzeichnet, dass** die erste Anordnung (34) mindestens zwei Lamellen (36) aufweist, die übereinander befestigt sind und durch einen freien Raum (e) voneinander getrennt sind, wobei die Lamellen ortsfest bezüglich des ersten Trägerarms (32) sind.

2. Raumfahrzeug (2) nach Anspruch 1, in welchem der erste Radiator (22) von der Fläche -Y (16) getragen wird und in welchem die Lamellen (36) der ersten Anordnung (34) im Wesentlichen parallel sind zur Richtung der Sonnenstrahlung (Is_{E}) während des Sommersolstitiums (SE).

3. Raumfahrzeug (2) nach einem der Ansprüche 1 und 2, das aufweist:
- einen zweiten Radiator (24), der von der entsprechend anderen der Fläche -Y (16) und Fläche +Y (18) getragen wird; wobei der zweite Radiator (24) eine Außenfläche (30) hat;
- einen zweiten Trägerarm (33), der sich im Wesentlichen senkrecht zur Außenfläche (30) des zweiten Radiators (24) erstreckt, wobei der zweite Trägerarm (33) eine Längsachse (B-B) hat;
- einen Antriebsmotor (50, 51), der zum Antreiben des zweiten Trägerarms (33) in Drehung um die Längsachse (B-B) des zweiten Trägerarms geeignet ist, wobei die Drehgeschwindigkeit des zweiten Trägerarms (33) im Wesentlichen gleich der Drehgeschwindigkeit der Sonne um das Raumfahrzeug (2) ist;
- eine von dem zweiten Trägerarm (33) getragene zweite Anordnung (35), die mindestens eine Absorptionsfläche (40) hat, die in einem Winkel (α), der im Wesentlichen zwischen 20° und 26° ist, bezüglich der Außenfläche (30) des zweiten Radiators (24) geneigt ist,
und in welchem die zweite Anordnung (35) mehrere Lamellen (36) aufweist, die ortsfest bezüglich des zweiten Trägerarms (33) sind; wobei die Lamellen (36) übereinander befestigt sind und durch einen freien Raum (e) voneinander beabstandet sind, wobei die Lamellen (36) der zweiten Anordnung (35) im Wesentlichen parallel zur Richtung der Sonnenstrahlung (Is_{H}) während des Wintersolstitiums (SH) sind.

4. Raumfahrzeug (2) nach einem der Ansprüche 1 bis 3, das mindestens ein Solarpaneel (20, 21) aufweist und in welchem der erste Trägerarm (32) und/oder der zweite Trägerarm (32) das mindestens eine Solarpaneel (20, 21) trägt.

5. Raumfahrzeug (2) nach einem der Ansprüche 1 bis 4, in welchem die Lamellen (36) eine Polyimidschicht und geeignete Stäbe zum Versteifen der Polyimdschicht aufweisen.

6. Raumfahrzeug (2) nach einem der Ansprüche 1 bis 5, in welchem die mindestens eine Absorptionsfläche (40) eine Beschichtung mit hohem solarem Absorptionsvermögen, beispielsweise eine Beschichtung in schwarzer Farbe, aufweist.

7. Raumfahrzeug (2) nach einem der Ansprüche 1 bis 6, in welchem die Außenfläche (30) des Radiators eine nichtspiegelnde Beschichtung aufweist.

8. Raumfahrzeug (2) nach einem der Ansprüche 1 bis 7, in welchem jede Lamelle (36) eine Dicke von weniger als einem Millimeter hat.

9. Raumfahrzeug (2) nach einem der Ansprüche 1 bis 8, in welchem die Lamellen (36) einer Anordnung der ersten (34) und zweiten (35) Anordnung zueinander parallel sind.

## Claims

1. Spacecraft (2) comprising:
- a body (4) having a face +Y (18) and a face -Y (16) opposite the face +Y (18);
- a first radiator (22) carried by at least one face out of the face +Y (18) and the face -Y (16); said first radiator (22) having an outer face (30);
- a first supporting arm (32) extending substantially perpendicularly to the outer face (30) of the first radiator, said first supporting arm (32) having a longitudinal axis (A-A);
- a drive motor (50, 51) suitable for rotating the first supporting arm (32) about said longitudinal axis (A-A) of the first supporting arm, the speed of rotation of the first supporting arm (32) being substantially equal to the speed of revolution of the sun around the spacecraft (2);
- a first assembly (34) carried by the first supporting arm (32), said first assembly (34) having at least one absorption face (40) suitable for absorbing a portion of the incident solar radiation (I_{E}) during the vernal (EP) and autumnal (EA) equinoxes, said first assembly (34) being suitable for transmitting a heat generated by said portion of the incident solar radiation absorbed to the first radiator (22); said absorption face (40) being inclined with respect to the outer face (30) of the first radiator (22) by an angle (α) substantially between 20° and 26°,
**characterised in that** said first assembly (34) comprises at least two slats (36) attached one above the other and separated from each other by a free space (e), said slats being stationary with respect to the first supporting arm (32).

2. Spacecraft (2) according to claim 1, wherein said first radiator (22) is carried by the face -Y (16) and wherein said slats (36) of the first assembly (34) are substantially parallel to the direction of the solar radiation (Is_{E}) during the summer solstice (SE).

3. Spacecraft (2) according to any of claims 1 and 2, comprising:
- a second radiator (24) carried by the other face out of the face -Y (16) and the face +Y (18); said second radiator (24) having an outer face (30);
- a second supporting arm (33) extending substantially perpendicularly to the outer face (30) of the second radiator (24), said second supporting arm (33) having a longitudinal axis (B-B);
- a drive motor (50, 51) suitable for rotating the second supporting arm (33) about said longitudinal axis (B-B) of the second supporting arm, the speed of rotation of the second supporting arm (33) being substantially equal to the speed of revolution of the sun around the spacecraft (2);
- a second assembly (35) carried by the second supporting arm (33), said second assembly (35) having at least one absorption face (40) inclined with respect to the outer face (30) of the second radiator (24) by an angle (α) substantially between 20° and 26°,
and wherein said second assembly (35) comprises a plurality of slats (36) stationary with respect to the second supporting arm (33); since said slats (36) are attached one above the other and separated from each other by a free space (e), said slats (36) of the second assembly (35) are substantially parallel to the direction of the solar radiation (Is_{H}) during the winter solstice (SH).

4. Spacecraft (2) according to any of claims 1 to 3, comprising at least one solar panel (20, 21), and wherein said first supporting arm (32) and/or said second supporting arm (32) supports said at least one solar panel (20, 21).

5. Spacecraft (2) according to any of claims 1 to 4, wherein said slats (36) comprise a polyimide film and rods suitable for rigidifying said polyimide film.

6. Spacecraft (2) according to any of claims 1 to 5, wherein said at least absorption face (40) has a coating having high solar absorptivity, for example a black coating.

7. Spacecraft (2) according to any of claims 1 to 6, wherein the outer face (30) of said radiator has a non-specular coating.

8. Spacecraft (2) according to any of claims 1 to 7, wherein each slat (36) has a thickness of less than one millimetre.

9. Spacecraft (2) according to one of claims 1 to 8, wherein said slats (36) of one assembly out of the first assembly (34) and the second assembly (35) are parallel to each other.
